# DEMANDE DE BREVET EUROPEEN

(11) **EP 2 792 253 A1**
(43) Date de publication de la demande: **22.10.2014**
(21) Numéro de dépôt: 14164643.0
(22) Date de dépôt: 14.04.2014
(51) Int. Cl.: A23L 1/314, A23L 1/317, A22C 9/00, A23B 4/02

(54) **Charcuterie sans allergènes**

(30) Priorité: 16.04.2013 FR 1353460
(71) Demandeur: Line, 67340 Ingwiller (FR)
(72) Inventeur: Lorch, Eric, 67340 Ingwiller (FR)
(74) Mandataire: Hege, Frédéric

(57) **Abrégé**

La présente invention concerne une charcuterie composée de viande, et d'additifs caractérisée en ce qu'elle ne comporte aucun phosphate, aucun lactose et aucun gluten, et en ce qu'elle comporte du citrate de sodium, du gingembre et de l'oignon.

La présente invention concerne également un procédé de fabrication d'une charcuterie selon l'invention. Ce procédé comprend les étapes suivantes :
- préparation de morceaux de viande, généralement boeuf et/ou veau et/ou porc et/ou volaille,
- salage à l'aide d'une injecteuse,
- hachage à l'aide d'un hachoir,
- malaxage, à l'aide d'un cutter, avec ajout des additifs, et de glace,
- embossage à l'aide d'un poussoir dans du boyau, pour donner la forme finale à la saucisse,
- cuisson,
- refroidissement rapide.

## Description

La présente invention se situe dans le domaine de la charcuterie Elle concerne plus particulièrement une charcuterie sans allergènes.

Les charcuteries industrielles sont habituellement préparées avec une quantité de viande, par exemple de boeuf, de veau de porc et/ou de volaille, à laquelle on ajoute divers additifs, comme par exemple des liants, des stabilisants, des colorants, des exhausteurs de goût et des épices.

Néanmoins certains de ces additifs sont allergènes, c'est-à-dire qu'ils sont susceptibles de provoquer des allergies chez certains consommateurs, en particulier chez des enfants.

Les phosphates sont très largement utilisés comme liants et conservateurs. Leur utilisation a même été multipliée par quatre dans les cinquante dernières années. Ce sont des substances peu chères et constituent souvent la majeure partie des additifs. Des allergies aux phosphates ont été mises en évidence dans les années 70, et les recommandations de régimes sans phosphates se sont multipliées ces dernières années. Il a également été recommandé de réduire les quantités de phosphates consommées par l'ensemble de la population, pour améliorer globalement la santé publique.

Les glutens sont associés à d'autres éléments introduits dans des produits de charcuterie, comme le blé, et certains utilisateurs y sont allergiques.

Les glutamates sont généralement utilisés pour exhaure le goût de la viande, et produisent des allergies chez certains utilisateurs.

Les lactoses enfin sont utilisés pour améliorer la texture et la conservation, et peut également provoquer des allergies chez certains utilisateurs.

Sans de tels additifs, la charcuterie n'a pas la consistance ni le goût attendu par les utilisateurs, et aura donc des difficultés à être vendu. Il existe donc un besoin de trouver des charcuteries qui présentent la consistance et le goût requis, tout en ne contenant pas d'allergènes. De telles charcuteries doivent en outre pouvoir être fabriquées industriellement.

La présente invention a pour but de pallier au moins en partie à ces inconvénients, et de proposer une charcuterie sans allergènes. A cet effet elle propose une charcuterie composée de viande, et d'additifs ; cette charcuterie est particulière en ce qu'elle ne comporte aucun phosphate, aucun lactose et aucun gluten, et en ce que lesdits additifs comportent du citrate de sodium, du gingembre et de l'oignon.

Grâce à ces dispositions, la charcuterie selon l'invention ne présente aucun risque d'allergie, et présente néanmoins les caractéristiques de texture, de conservation et de goût des charcuteries connues.

Selon d'autres caractéristiques
- ladite charcuterie peut en outre ne comporter aucun glutamate, réduisant encore les risques d'allergie chez les utilisateurs,
- lesdits additifs peuvent comporter en outre de la coriandre, de l'ail et de la muscade, permettant ainsi d'améliorer encore le goût de la charcuterie,
- la viande peut comprendre du boeuf, du maigre de porc, du gras de porc, et les additifs comprendre en outre du poireau et de la marjolaine, constituant ainsi une composition adaptée pour de la saucisse de viande,
- la viande peut comprendre du boeuf, du veau, de la gorge de porc, et les additifs comprendre en outre du carvi, du macis et du poivre, proposant ainsi une composition adaptée pour des knacks, ou saucisses de Strasbourg,
- la viande peut comprendre du boeuf, du veau, de la gorge de porc, et les additifs comprendre en outre de la cardamone, du carvi, de l'échalote, du macis, du piment et du poivre, proposant ainsi une composition adaptée pour des saucisses viennoises.

La présente invention concerne également un procédé de fabrication d'une charcuterie selon l'invention, comprenant les étapes suivantes :
- préparation de morceaux de viande, généralement boeuf et/ou veau et/ou porc et/ou volaille,
- salage à l'aide d'une injecteuse,
- hachage à l'aide d'un hachoir,
- malaxage, à l'aide d'un cutter, avec ajout des additifs, et de glace,
- embossage à l'aide d'un poussoir dans du boyau, pour donner la forme finale à la saucisse,
- cuisson,
- refroidissement rapide.

L'avantage apporté par la présente invention réside principalement en ce qu'elle permet d'obtenir une charcuterie ayant un goût et une texture équivalente aux charcuteries de l'état de la technique, tout en garantissant l'absence d'allergènes, en particulier de phosphates, de glutens et de lactoses, et dans une forme préférée de l'invention également l'absence de glutamates.

La présente invention sera mieux comprise à la lecture de la description détaillée qui suit.

Les additifs de l'état de la technique comprennent des phosphates, des glutens, des glutamates et des lactoses. Selon l'invention on propose une charcuterie sans phosphates, sans gluten et sans lactose, tous trois susceptibles de provoquer des allergies chez certains utilisateurs, de préférence aussi sans glutamates.

La charcuterie selon l'invention contient du citrate de sodium, produit apte à remplir la fonction de liant et d'antioxydant, et du gingembre et de l'oignon, le cas échéant mélangé à d'autres épices végétales pour améliorer le goût.

Selon un mode particulier de réalisation de l'invention, on y ajoute de l'ail, de la coriandre, de la muscade, et le cas échéant d'autres arômes naturels.

### Exemple de composition pour une saucisse de viande :

La viande de base comporte du boeuf, du maigre de porc et du gras de porc.

Les additifs sont de l'ail, de la coriandre, du gingembre, de la muscade, de l'oignon, du poireau et de la marjolaine, auxquels on ajoute du citrate de sodium.

### Exemple de composition pour une viennoise :

La viande de base comporte du boeuf, du veau et de la gorge de porc.

Les additifs sont de la cardamone, du carvi, de l'échalote, du gingembre, du macis, de l'oignon, du piment et du poivre, ainsi que du citrate de sodium.

### Exemple de composition pour une knack, encore appelée saucisse de Strasbourg :

La viande de base comporte du boeuf, du veau, de la gorge de porc.

Les additifs sont de l'ail, du carvi, de la coriandre, du gingembre, du macis, de la muscade, de l'oignon, du poivre et du citrate de sodium.

De manière connue, on y ajoute également du sucre et du sel, et selon les produits de charcuterie, de l'ascorbate de sodium et/ou de l'acide ascorbique. D'autres additifs peuvent être ajoutés, mais selon l'invention, aucun d'eux ne contient du phosphate, du gluten ou du lactose, et de préférence pas de glutamates.

Le procédé de fabrication de la charcuterie est alors substantiellement le suivant :
- préparation de morceaux de viande, généralement boeuf et/ou veau et/ou porc et/ou volaille,
- salage à l'aide d'une injecteuse,
- hachage à l'aide d'un hachoir,
- malaxage, à l'aide d'un cutter, avec ajout des additifs, en particulier de citrate de sodium, et un mélange contenant du gingembre et de l'oignon et d'autres arômes naturels comme indiqué ci-dessus ; on ajoute également de la glace à ce stade, d'une part pour ajouter de l'eau, d'autre part pour maintenir la température suffisamment basse,
- embossage à l'aide d'un poussoir dans du boyau, pour donner la forme finale à la saucisse,
- cuisson,
- refroidissement rapide.

L'avantage de la présente invention est en particulier de proposer des produits de charcuterie ne présentant aucun risque d'allergie pour les utilisateurs allergiques au gluten ou au lactose ou aux glutamates, et améliorant le bien être de l'ensemble des utilisateurs grâce à l'absence complète de phosphates.

Les charcuteries selon l'invention présentent un aspect, une texture et un goût similaire à celui des charcuteries de l'état de la technique, et sont donc tout aussi désirables aux yeux des utilisateurs. Ils permettent en plus aux personnes allergiques aux phosphates, aux glutens, aux glutamates ou aux lactoses de consommer ces charcuteries sans crainte. Par ailleurs les consommateurs de ces charcuteries améliorent globalement leur santé, par l'absence de consommation de phosphates.

Bien que l'invention ait été décrite selon un mode de réalisation particulier, elle n'y est nullement limitée, et des variantes peuvent y être apportées, ainsi que des combinaisons des variantes décrites, sans pour autant sortir du cadre de la présente invention.

## Revendications

1. Charcuterie composée de viande, et d'additifs **caractérisée en ce qu'**elle ne comporte aucun phosphate, aucun lactose et aucun gluten, et **en ce que** lesdits additifs comportent du citrate de sodium, du gingembre et de l'oignon.

2. Charcuterie selon la revendication précédente, ne comprenant aucun glutamate.

3. Charcuterie selon l'une des revendications précédentes, dans laquelle lesdits additifs comportent en outre de la coriandre, de l'ail et de la muscade.

4. Charcuterie selon l'une des revendications précédentes, dans laquelle la viande comprend du boeuf, du maigre de porc, du gras de porc, et les additifs comprennent en outre du poireau et de la marjolaine.

5. Charcuterie selon l'une des revendications 1 à 3, dans laquelle la viande comprend du boeuf, du veau, de la gorge de porc, et les additifs comprennent en outre du carvi, du macis et du poivre.

6. Charcuterie selon la revendication 1 à 3, dans laquelle la viande comprend du boeuf, du veau, de la gorge de porc, et les additifs comprennent en outre de la cardamone, du carvi, de l'échalote, du macis, du piment et du poivre.

7. Procédé de fabrication d'une charcuterie selon l'une des revendications précédentes, comprenant les étapes suivantes :
- préparation de morceaux de viande, généralement boeuf et/ou veau et/ou porc et/ou volaille,
- salage à l'aide d'une injecteuse,
- hachage à l'aide d'un hachoir,
- malaxage, à l'aide d'un cutter, avec ajout des additifs, et de glace,
- embossage à l'aide d'un poussoir dans du boyau, pour donner la forme finale à la saucisse,
- cuisson,
- refroidissement rapide.
